# EUROPEAN PATENT APPLICATION

(11) **EP 1 322 097 A1**
(43) Date of publication of application: **25.06.2003**
(21) Application number: 01130642.0
(22) Date of filing: 21.12.2001
(51) Int. Cl.: H04L 29/14, H04L 29/06

(54) **A method and computer system for client server inter process communication**

(71) Applicant: SIEMENS AKTIENGESELLSCHAFT, 80333 München (DE)
(72) Inventor: Bortoloso, Luca, 16151 Genova (IT); Dighero, Stefano, 16146 Genova (IT)

(57) **Abstract**

The invention relates to a method for client-server interprocess communication comprising the steps of:
- registering a client application (20) with a first inter network service module (22) by entering a client port name, a client physical address, and a redundant physical address,
- registering a server application (21) with a second inter network service module (23) by entering a server port name, a server physical address and a redundant physical address,
- establishing a connection between the client application (20) and the server application (21) by means of the client physical address and the server physical address,
- synchronizing the first and second inter network service modules (22,23),
- establishing a redundant connection between the client application (20) and the server application (21) by means of the redundant client physical address and the redundant server physical address in case a predetermined condition is fulfilled.

## Description

### Field of the invention

The present invention relates to the field of client-server inter process communication, and more particularly to client-server inter process communication in an industrial automation system.

### Background and prior art

Many software applications are based on a multi-tier architecture where different components of the same application perform a variety of tasks in a distributed way. This requires the exchange of commands and data between the different components. In such an architecture a client-server connection is established between two layers.

The distributed component objects model (DCOM) is a protocol that enables software components to communicate directly over a network. Previously called "Network OLE", DCOM is designed for use across multiple network transports, including Internet protocols such as HTTP.DCOM is based on the Open Software Foundation's DCE-RPC spec and works with both Java applets and ActiveX® components through its use of the Component Object Model(COM).

DCOM is an extension of the Component Object Model (COM). COM defines how components and their clients interact. This interaction is defined such that the client and the component can connect without the need of any intermediary system component. In today's operating systems, processes are shielded from each other. A client that needs to communicate with a component in another process cannot call the component directly, but has to use some form of interprocess communication provided by the operating system. COM provides this communication in a transparent fashion: it intercepts calls from the client and forwards them to the component in another process. When client and component reside on different machines, DCOM replaces the local inter process communication with a network protocol.

Network connections are inherently more fragile than connections inside a machine. Components in a distributed application need to be notified if a client is not active anymore, even - or especially - in the case of a network or hardware failure.

DCOM manages connections to components that are dedicated to a single client, as well as components that are shared by multiple clients, by maintaining a reference count on each component. When a client establishes a connection to a component, DCOM increments the component's reference count. When the client releases its connection, DCOM decrements the component's reference count. If the count reaches zero, the component can free itself.

DCOM uses a pinging protocol to detect if clients are still active. Client machines send a periodic message. DCOM considers a connection as broken if more than three ping periods pass without the component receiving a ping message. If the connection is broken, DCOM decrements the reference count and releases the component if the count has reached zero. From the pint of view of the component, both the benign case of a client disconnecting and the fatal case of a network or client machine crash are handled by the same reference counting mechanism.

With DCOM, any component can be both a provider and a consumer of functionality. The same mechanism and features manage communication in both directions, making it easy to implement peer-to peer communication, as well as client / server interactions.

It is a major drawback of standard technologies like COM or DCOM that they are not designed to satisfy the performance and reliability requirements which are typical in industrial environments. Such environments require very high rates of data exchange with a low network load.

On the other hand reliability is a key requirement especially for mission critical applications. All prior art systems where the inter process communication between two layers relies on standard technologies or protocols like COM or DCOM cannot guarantee such a level of performance and reliability.

To solve this problem of the prior art two different approaches are known:
- usage of special networking hardware,
- development of proprietary communication protocols which however limit the possibility to freely choose networking hardware.

All of these approaches are expensive and / or hardly portable when the underlying operating system technology evolves.

It is therefore an object of the present invention to provide an improved method and computer system for client server inter process communication as well as a corresponding computer program product.

### Summary of the invention

The underlying problem of the invention is solved basically by applying the features laid down in the independent claims. Preferred embodiments of the invention are given in the dependent claims.

The present invention is particularly advantageous in that it enables to create a distributed computer system featuring the reliability which is required for a mission critical application such as in an industrial automation environment. In particular this is accomplished by providing redundancy support for failures of network connections.

In accordance with a preferred embodiment of the invention a general software service and library are utilized in order to virtualize all the operations needed by any client-server application to handle the server side and the client side parts.

Preferably this service is based on standard networking technologies like Windows Sockets, but at the same is able to tightly control the inter process communication in order to guarantee the best performance and reliability as well as supporting redundant networking adapters.

In accordance with a further preferred embodiment of the invention Windows Sockets is used to provide a single application programming interface (API) across all TCP / IP protocol stacks for the implementation of the general software service and library to virtualize the required client-server operation. Windows sockets is a software technology which is as such known from the prior art (cf. "Windows Sockets Network Programming", by Quinn and Dave Shute, Addison-Wesley, Reading, MA, ISBN:
0-201-63372-8)

In accordance with a further preferred embodiment of the invention the library hides all the complexity of the inter process communication and provides a general-purpose server-side and client-side set of functions that allow to easily implement client-server applications without the burden of handling high-performance and reliable communication as well as redundant networks. In fact such networking tasks are completely encapsulated and not visible to the server and client applications.

Further the invention enables to dramatically simplify the development of client-server applications. Networking tasks as synchronisations, data transmission and network failure detection are integrated in the software service and library of the invention such that the developer of a client-server application is freed from such aspects of the system requirements. Further the centralized architecture of the inter process communication allows to apply sophisticated policies for performance detection and tuning as well as advanced diagnostics and bug searching.

In particular, the automatic management of network redundancy allows to configure reliable connections between computers at very low cost, using normal network adapters and avoiding the purchase of dedicated hardware which simplifies the supplying and maintenance procedures.

In accordance with a further preferred embodiment of the invention standard networking protocols such as TCP / IP are supported; further the virtualisation allows to port the inter process communication (IPC) server to other protocols like http, SOAP and others.

In accordance with a further aspect of the invention load balancing is enabled based on redundant networks. The load balancing forms part of the software service and library in accordance with the present invention.

Further it is to be noted that the client side and the server side can be installed on the same computer for local communications applications or on different computers for remote communications applications. The different computers can be connected by means of a local area network (LAN) or by means of a wide area network (WAN).

### Brief description of the drawings

In the following a preferred embodiment of the invention is described in greater detail by making reference to the drawings in which:
- Figure 1: is illustrative of a first embodiment of the invention in a LAN,
- Figure 2: is illustrative of the inter process communication data flow,
- Figure 3: is illustrative of an application of the invention involving internet communication.

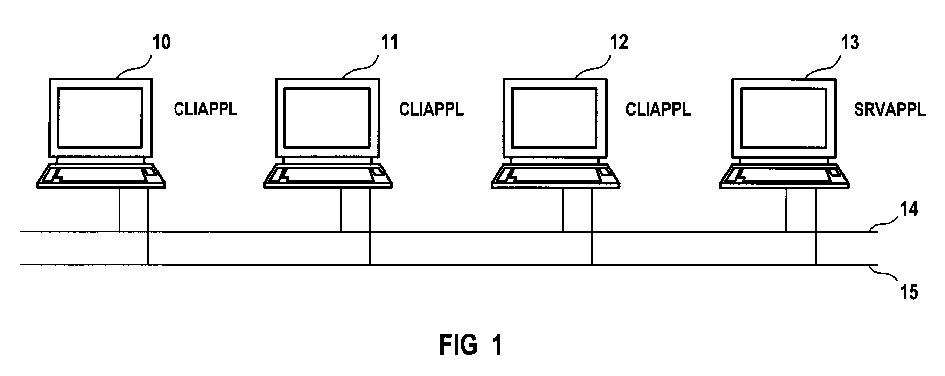

Figure 1 shows a computer system comprising workstations 10, 11, 12 and 13. Each of the workstations 10, 11 and 12 have a client application whereas workstation 13 has a server application. The workstations 10, 11, 12 and 13 are connected by a network 14. Optionally the workstations 10, 11, 12 and 13 are connected by a redundant network 15.

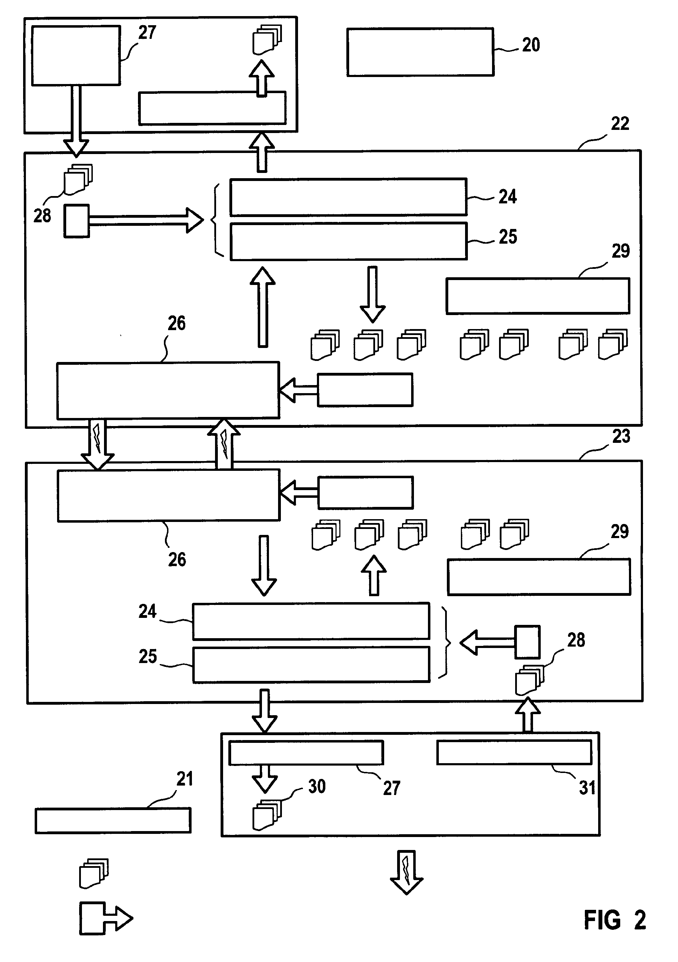

Figure 2 illustrates the inter process communication data flow. The inter process communication data flow involves a client application 20 and a server application 21. The client application and the server application have dedicated inter network service modules 22 and 23, respectively.

Both of the inter network service modules 22 and 23 have a virtual connection table 24 and a physical connection table 25.

For example, when the client application 20 is initialised it is registered in its dedicated inter network service module 22 by creating entries in the virtual connection table 24 and the physical connection table 25.

The virtual connection table 24 serves to store the client port name, in other words the client port ID, whereas the physical connection table 25 serves to store the physical address of the corresponding connection path. When redundant network connections are available (cf. network 15 of figure 1) the redundant network connection is also entered into the virtual connection table 24 and the physical connection table 25 by specifying one or more alternative port names and one or more alternative physical addresses.

The same applies correspondingly for registering the server application 21 with its dedicated inter network service module 23. It is important to note that the virtual connection tables 24 and the physical connection tables 25 of the inter network service modules 22 and 23 are copies of each other which is accomplished by synchronising the contents of these tables.

Further both of the inter network service modules 22 and 23 have a socket port 26 for sending and receiving of data via a network connection (cf. network 14 and network 15 of figure 1).

When the client application sends the request, such as a question 27, a corresponding function of the API is invoked in order to input the question 27 into the input queue 28 of the inter network service module 22. When the question 27 is processed a connection path is determined by accessing the virtual connection table 24 and the physical connection table 25 of the inter network service module 22.

This way the question 27 is transformed into a data packet which is to be transmitted to the appropriate server application 21. This transformation of the requests of the input queue 28 results in an unnamed output queue 29. This output queue 29 is processed by the socket port 26 and outputted over the appropriate network connections.

The question 27 is send from the socket port 26 to the inter network service module 23 of the server application 21. By means of the virtual connection table 24 and the physical connection table 25 of the inter network service module 23 the prior transformation of the question 27 by means of the virtual connection table 24 and the physical connection table 25 of the inter network service module 22 is inverted. This way the question 27 is received and inputted to the server application 21 by means of input queue 30.

After processing of the question 27 by the server application 21 the corresponding answer 31 is send back to the client application 20. The procedure for sending the answer 31 back to the client application 20 is analogous to the communication path form the client application 20 to the server application 21. As a consequence an input queue 28 and an output queue 29 is created in the inter network service module 23 corresponding to the input queue 28 and the output queue 29 of the inter network service module 22.

This data flow enables the following architectures:
Server-side architecture
1. Declare a "port" identified by an alphanumeric string.
2. Wait for messages coming form the client side (local or remote).
3. Read the message received.
4. Prepare the corresponding "response message" and send it to the client.
5. Go to step 2.

The server application can create multiple ports. In this case it is necessary to instantiate a different waiting loop for each port.

A disadvantage of this approach is that the server application has to immediately prepare a response in order to avoid the queuing of incoming messages. However by means of little more programming code it is possible to implement a server application with "parallel" architecture in order to avoid queuing problems, like in the following embodiment:
1. Declare a "port" identified by an alphanumeric string.
2. Wait for messages coming from the client side (local or remote).
3. Read the message.
4. Detach a thread in order to prepare the corresponding "response message".
5. Send an "acknowledge" message to the client in order to notify that the message has been correctly received.
6. Go to step2.
7. When a detached thread finishes to prepare the response, send it to the corresponding client, then terminates itself.

### Client-side architecture

1. Open a connection with the server application (local or remote) specifying the port name declared by the server itself.
2. Send a message and wait for the response message.
3. Read the response message.
4. Go to step 2.

This makes it possible to send messages that do not require a response, i.e. a datagram or similar messages. It is also possible to open multiple connections with the same server or with different servers. However, with this architecture it is not possible to send a message while on the same connection there is a thread waiting for a response. This possibility is provided by the following approach:
1. Open a connection with the server side (local or remote).
2. Specify a callback function to be called when a "response" message is received.
3. Send a message without waiting for response (waiting timeout=0).
4. Go to step 3.

When a new "response" message is received by the inter network service module, the callback function will be called so the client application will receive the response message and a reference identifier to the associated sent message.

This type of architecture is useful, for instance, for a server application developed in parallel architecture that can receive from the same client different types of "question messages" implying very different answer preparing times. In these cases the client application can send the "question" from a thread and await the "answer" from the callback so the "answer" to "simple questions" will be received in a short time, while the "answer" to "complex questions" will arrive later. A client application can open multiple connections to the same server or to different servers.

It is important to note that the inter network service modules 22 and 23 manage redundant networks in a way which is completely transparent to the client and server applications.

For example, it is possible to connect the server and client computers using two common network adapter cards. Different kinds of networks can be utilized; for instance one network can be the Ethernet and the other network can be a token ring network.

When the client applications connects to a server application, the connection is established on one of the two networks. If the network selected fails over, the communications automatically switches to the other one but neither the client and server application detect the event and both will continue the normal communication activity.

It is possible to configure the priority network, i.e. the first network on which to retry the connection operations. If for any reason that network is not available, automatically the connection will be established on the other network.

The automatic switch can happened also if the network in use is too slow. In this case an adaptive algorithm modifies the timeouts used for detection of network failure in order to avoid subsequent unnecessary switches. This type of management permits to apply an automatic "load balancing" policy.

It is a further advantage that the inter network service modules on each computer only use one port number in order to communicate with the other inter network service modules, independently from the number of applications which are connected. This simplifies the management of the security level of a proxy in a distributed architecture. The port number can be configured.

Further this inter process communication service allows to monitor and to test the communication activity in order to make performance tests or to solve communication problems which are caused by the server or client applications. The monitoring can be managed locally or remotely on each computer included in a list that defines a logical network.

Further a remote queue service can be implemented by means of the inter process communication service of the invention. An application can create a named queue waiting for elements that can be queued from another application running also on a different computer. It is possible to have many applications distributed on the network queuing data on the same queue. The queue is dynamically expanded when necessary and there are no constraints about the dimension of each element. This type of remote queue is volatile, i.e. not permanent features are implemented.

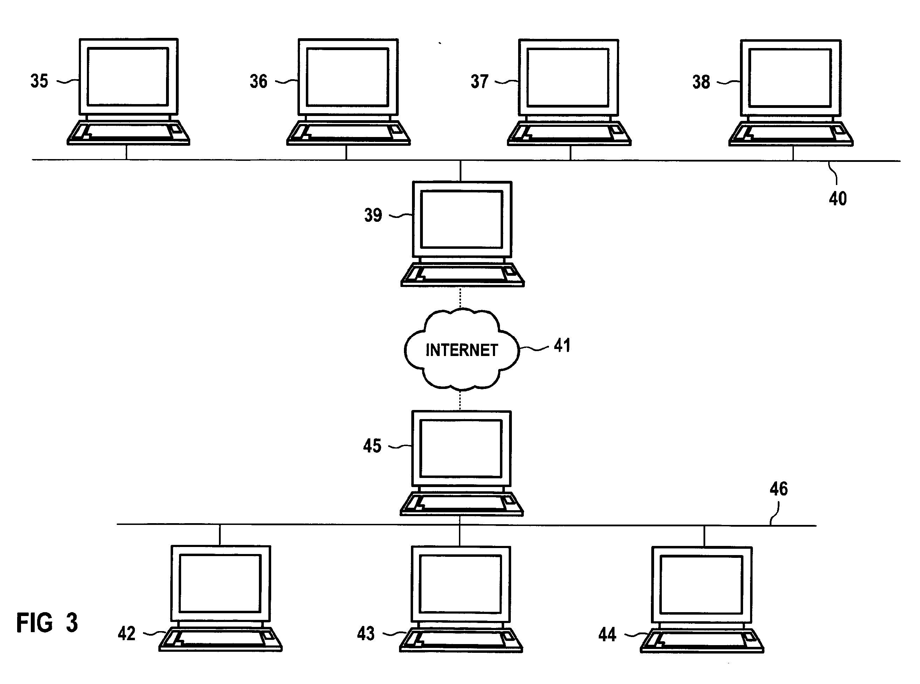

Figure 3 shows a computer system comprising workstations 35, 36, 37, 38 and 39 which are coupled by means of a network 40. The workstations 35, 36 and 37 run client applications whereas the workstation 38 has a server application.

The workstation 39 serves to provide inter process communication through internet 41. This is implemented by means of a service extension which is installed on the web-server workstation 39. For this purpose an ISAPI extension in IIS can be utilized. In this case the IIS installs several ISAPI extensions which are .dlls that provide extended functionality. The ISAPI extensions can be implemented as ISAPI filters to intercept incoming http requests.

Further the system comprises workstations 43, 44 and 45 which are coupled by a network 46.

The workstations 42, 43 and 44 have client applications which are developed as OCX and reside on a web client. The inter process communication service of the invention is loaded by a browser program of the corresponding workstation 42, 43 or 44 as a DLL. This way it is possible to connect the client application to a corresponding server running on a workstation connected to a web server - for example Microsoft IIS.

The inter process communication service extension for the web is installed on the web server on workstation 39 - for example using ISAPI extensions in IIS.

The client applications running on the workstation 42, 43 and 44 are connected to the server application on workstation 38 through proxy server 45.

## Claims

1. A method for client-server inter process communication comprising the steps of:
- providing a client application (20) and a server application (21),
- providing at least a first and a second network (14, 15) for coupling the client application and the server application,
- providing a first inter network service module (22) for the client application and a second inter network service module (23) for the server application,
- registering (24, 25) the client application with the first inter network service module by entering a client port name and a client physical address,
- registering (24, 25) the server application with the second inter network service module by entering a server port name and a server physical address,
- entering at least one redundant client physical address in the first inter network service module and one redundant server physical address the second inter network service module,
- establishing a connection between the client application and the server application by means of the client physical address and the server physical address,
- synchronizing the first and second inter network service modules,
- establishing a redundant connection between the client application and the server application by means of the redundant client physical address and the redundant server physical address in case a predetermined condition is fulfilled.

2. The method of claim 1, the predetermined condition being a failure of the connection between the client physical address and the server physical address.

3. The method of claim 1 or 2, the condition being a predetermined response time which is exceeded.

4. The method of claims 1, 2 or 3 whereby only one socket port (26) is used for the client port and the server port, respectively.

5. The method of anyone of the preceding claims 1 to 4, whereby a client virtual connection table (24) and a client physical connection table (25) are used for storage of the client port-name and the client physical address, respectively, and whereby a server virtual connection table (24) and a server physical connection table (25) are used for storing of the server port-name and the server physical address, respectively.

6. The method of anyone of the preceding claims 1 to 5, whereby a client input queue (28) is formed in the first inter network service module, the client input queue comprising requests of the client application, the client input queue being transformed into an output queue (29) for outputting via the single client socket port.

7. The method of anyone of the preceding claims 1 to 6, whereby the first network is an Ethernet type network and the second network is a token ring type network.

8. The method of anyone of the preceding claims 1 to 7, whereby the client application and the server application belong to an industrial automation system.

9. A computer program product for performing a method in accordance with anyone of preceding claims 1 to 8.

10. A computer system, such as an industrial automation system, comprising means for performing a method in accordance with anyone of the preceding claims 1 to 8.
